# EUROPÄISCHE PATENTANMELDUNG

(11) **EP 2 283 958 A1**
(43) Veröffentlichungstag der Anmeldung: **16.02.2011**
(21) Anmeldenummer: 09167557.9
(22) Anmeldetag: 10.08.2009
(51) Int. Cl.: B23F 19/00, B23F 23/12

(54) **Verfahren zum Glätten von Zahnrädern**

(71) Anmelder: Klingelnberg AG, 8023 Zürich (CH)
(72) Erfinder: Kapper, Götz, 55126 Mainz (DE); Landvogt, Alexander, 8307 Effretikon (CH); Pahud, Christian, 8057 Zürich (CH); Ersing, Axel, 76275 Ettlingen (DE)
(74) Vertreter: OK pat AG

(57) **Zusammenfassung**

Verfahren zur Hart-Nachbearbeitung der Zahnflanken eines Zahnrades (K3*, K3), das folgenden Schritte vorsieht. Nach dem Aufspannen des Zahnrades (K3*, K3) und mindestens eines Glättrades (12.1, 12.2, 12.3) in einer Bearbeitungsmaschine (10), wird eine relative Zustellbewegung (F1) ausgeführt, um das Glättrad (12.1, 12.2, 12.3) mit dem Zahnrad (K3*, K3) in eine vordefinierte Eingriffsposition zu bringen. Dann wird das Zahnrad (K3*, K3) und/oder das Glättrad (12.1, 12.2, 12.3) angetrieben, während sich die Räder im Eingriff befinden, wobei sich während dieser Phase, die als Nachbearbeitungsphase bezeichnet wird, das Zahnrad (K3*, K3) und das Glättrad (12.1, 12.2, 12.3) um ihre jeweiligen Rotationsachsen drehen. Während der Nachbearbeitungsphase steht das Glättrad (12.1, 12.2, 12.3) unter Druck mit den Zahnflanken des Zahnrades (K3*, K3) in Wechselwirkung und es wird eine Körperschallprüfung während dieser Phase durchgeführt. Zu diesem Zweck wird ein Ausgangssignal eines Körperschallsensors (13) abgefragt, der Teil der Bearbeitungsmaschine (10) ist. Bei dem Ausgangssignal (s(t)) handelt es sich um ein analoges Messsignal, welches das gemeinsame Schwingungsverhalten des Glättrades (12.1, 12.2, 12.3) und des Zahnrades (K3*, K3) charakterisiert, respektive abbildet. Ein Auswerten des Ausgangssignals (s(t)) während der Nachbearbeitungsphase ermöglicht eine Qualitätsbeurteilung des Zahnrades (K3*, K3). Die Nachbearbeitungsphase kann abgebrochen werden, nachdem die Qualitätsbeurteilung ergeben hat, dass ein Auswahlkriterium erreicht ist.

## Beschreibung

### Gebiet der Erfindung

Gegenstand der Erfindung ist ein Verfahren zum Glätten von Zahnrädern.

### Hintergrund der Erfindung, Stand der Technik

Es ist bekannt, dass man bei Stirnrädern zum Beispiel gemäss einem der beiden folgenden Ansätze verfahren kann, um die Qualität eines gefertigten Stirnrades beurteilen zu können. Entweder wird ein solches Stirnrad nach der Fertigung in einer speziellen Apparatur eingespannt, um dann gegen ein Lehrzahnrad im Zweiflankenkontakt abzurollen. Dabei wird der Achsabstand von Stirnrad und Lehrzahnrad mit einem Maßstab überwacht. Die Auswertung des Achsabstandsignals, wie z.B. dessen "plötzliche" Änderung, erlaubt den Rückschluss auf "Fehler" des getesteten Stirnrads.

Oder es wird ein automatisierter Ansatz verfolgt, bei dem nach der Fertigung das Stirnrad in einer automatisierten Prüf- oder Messmaschine eingespannt wird. Dort wird während des Abrollens mit einem Lehrzahnrad ein Körperschallsignal aufgenommen. Hier führt die Auswertung des Signalpegels des Körperschallsignals zur Detektion von möglichen "Fehlern" des getesteten Stirnrads.

Es ist auch bekannt, dass man zum Ermitteln der geeigneten Einbaulage zweier Kegelzahnräder einer Zahnradpaarung eine sogenannte kombinierte Körperschallprüfung (KSP) und Einflankenwälzprüfung (EWP) durchführen kann. Ein entsprechendes Verfahren und eine geeignete Vorrichtung sind der Patentanmeldung EP 1 862 789 A1 zu entnehmen.

Es ist ein Nachteil der Körperschallprüfung, dass die Ergebnisse der KSP von den Spannmitteln und den Schwingungseigenschaften der Prüf- oder Messmaschine abhängen. Ein weiterer Nachteil der KSP wird darin gesehen, dass sie abhängig ist von der aktuellen Einspannung des Zahnrades und dass man häufig auf verschiedenen Messgeräten verschiedene Ergebnisse für ein und dasselbe Zahnrad bekommt.

Im Zusammenhang mit der vorliegenden Erfindung geht es aber nicht um die Prüfung von Radsatzpaaren oder um das Ermitteln der geeignetsten Einbaulage, sondern es geht um individuelle Stirnzahnräder und um deren Beurteilung.

Nach dem Härten werden Zylinderräder typischerweise durch Schaben oder Schleifen nachbearbeitet und dann abtransportiert, um an einem anderen Ort eingebaut zu werden. Beim Transport und bei der Handhabung kann es zu Beschädigungen der Zahnflanken kommen. Diese Beschädigungen, die hier vereinfacht als Klopfer bezeichnet werden, können die Laufruhe beinträchtigen.

Bisher werden solche Zahnräder häufig einer Laufkontrolle unterzogen, um schadhafte Zahnräder erkennen und in einer Glättmaschine nachbearbeiten zu können. Ein anderer Ansatz basiert auf der manuellen Nachbearbeitung mittels Diamantfeile. Der Aufwand, der bisher betrieben wird ist relativ gross und es können trotzdem schadhafte Teile zum Einbau gelangen.

Aufgabe der vorliegenden Erfindung ist daher ein Verfahren zu entwickeln, dass es ermöglicht bei vertretbarem Aufwand schadhafte Zahnräder zu erkennen und nachzubearbeiten. Dieses Verfahren soll möglichst ohne grossen Maschinenaufwand und ohne den Einsatz teurer Werkzeuge realisiert werden.

### Zusammenfassung der Erfindung

Diese Aufgabe wird gemäß der vorliegenden Erfindung durch ein Verfahren gelöst, das zur Hart-Nachbearbeitung der Zahnflanken eines Zahnrades die folgenden Schritte vorsieht. Nach dem Aufspannen des Zahnrades und mindestens eines Glättrades in einer Bearbeitungsmaschine, wird eine relative Zustellbewegung ausgeführt, um das Glättrad mit dem Zahnrad in eine vordefinierte Eingriffsposition zu bringen. Dann wird das Zahnrad und/oder das Glättrad angetrieben, während sich die beiden Räder im Eingriff befinden, wobei sich während dieser Phase, die als Nachbearbeitungsphase bezeichnet wird, das Zahnrad und das Glättrad um ihre jeweiligen Rotationsachsen drehen. Während der Nachbearbeitungsphase steht das Glättrad unter Druck mit den Zahnflanken des Zahnrades in Wechselwirkung und es wird eine Körperschallprüfung während dieser Phase durchgeführt. Zu diesem Zweck wird ein Ausgangssignal eines Körperschallsensors abgefragt, der Teil der Bearbeitungsmaschine ist. Bei dem Ausgangssignal handelt es sich um ein analoges Messsignal, welches das gemeinsame Schwingungsverhalten des Glättrades und des Zahnrades charakterisiert, respektive abbildet. Ein Auswerten des Ausgangssignals während der Nachbearbeitungsphase ermöglicht eine Qualitätsbeurteilung des Zahnrades. Die Nachbearbeitungsphase kann abgebrochen werden, nachdem die Qualitätsbeurteilung ergeben hat, dass ein Auswahlkriterium erreicht ist, oder falls der automatische Glättprozess erfolglos ist.

Das erfindungsgemässe Verfahren ist speziell für die Nachbearbeitung von Zahnflanken nach einem Härteprozess, also im harten Zustand, ausgelegt. Entsprechend sind die Glättwerkzeuge auszuwählen, die zum Einsatz kommen. Das entsprechende Verfahren wird daher als Hartbearbeitung bezeichnet. Da es hier um die Überarbeitung bzw. Nachbearbeitung fertiger Zahnflanken geht, wird das Verfahren auch als Hart-Nachbearbeitung bezeichnet.

Der wichtigste Vorteil des erfinderischen Verfahrens wird darin gesehen, dass eine einfache automatisierte und problemlose Beseitigung von kleineren Beschädigungen an den Zahnflanken gewährleistet wird, wobei vorgegebene Oberflächenqualitäten erzielt werden können. Die erfindungsgemässe Nachbearbeitung wirkt sich positiv auf Lebensdauer und Laufruhe der entsprechend bearbeiteten Zahnräder aus.

Es ist ein weiterer Vorteil des Verfahrens, dass es kostengünstig und schnell ausführbar ist, ohne das grosse Investitionskosten für aufwendige Maschinen erforderlich sind.

### ZEICHNUNGEN

Weitere Einzelheiten und Vorteile der Erfindung werden im Folgenden anhand von Ausführungsbeispielen und mit Bezug auf die Zeichnung beschrieben. Es zeigen:
- **FIG. 1A**: ein Schema für die Bearbeitung von Kegelrädern;
- **FIG. 1B**: ein Schema für die Nachbearbeitung von Stirnrädern;
- **FIG. 2A**: eine schematische Draufsicht einer erfindungsgemässen Maschine für die Nachbearbeitung von Stirnrädern;
- **FIG. 2B**: eine Seitenansicht einer erfindungsgemässen Maschine für die Nachbearbeitung von Stirnrädern;
- **FIG. 2C**: eine Draufsicht der erfindungsgemässen Maschine nach Fig. 2B,
- **FIG. 3**: ein schematisches Diagramm, das den Signalverlauf eines Signals eines Körperschallsensors bei der Nachbearbeitung eines Stirnrades zeigt;
- **FIG. 4**: ein schematisches Flussdiagramm, das die grundlegenden Schritte der erfindungsgemässen Nachbearbeitung eines Stirnrades zeigt;
- **FIG. 5**: ein schematisches Diagramm, das einen weiteren Signalverlauf eines Signals eines Körperschallsensors bei der Nachbearbeitung eines Stirnrades zeigt;
- **FIG. 6**: eine schematische Seitenansicht eines Teils einer weiteren erfindungsgemässen Maschine für die Nachbearbeitung von Stirnrädern.

### DETAILLIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäss anzuwenden.

Der Begriff Zahnrad wird hier als Oberbegriff für jegliche Arten von Zahnrädern, Stirnrädern, Kegelrädern (z.B. Spiralkegelräder), Tellerrädern, Ritzel usw. verwendet. Die vorliegende Erfindung eignet sich besonders für dass Nachbearbeiten von Stirn- und Schraubrädern.

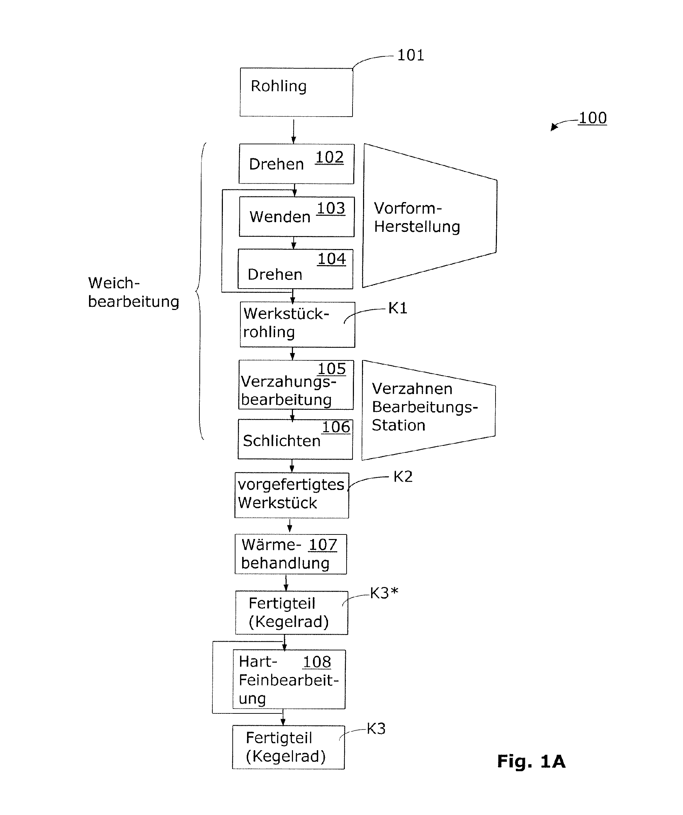

Fig. 1A zeigt eine schematische Darstellung eines beispielhaften Verfahrensablaufs 100. Die Erfindung kann in dem gezeigten Zusammenhang eingesetzt werden. Es handelt sich, wie erwähnt, um ein Beispiel für die Bearbeitung eines Tellerrades oder Kegelritzels. Ausgehend von einem Rohling (Box 101) werden in dem gezeigten Beispiel folgende Weichbearbeitungsschritte durchgeführt. Es kann zum Beispiel eine (Zentral-) Bohrung durch Drehen (Box 102) erzeugt werden. Dann kann der Rohling zur weiteren Bearbeitung gewendet werden (Box 103). Nach dem Wenden kann eine erneute Drehbearbeitung folgen (Box 104). Diese Schritte sind optional und werden im vorliegenden Zusammenhang als Vorform-Herstellung bezeichnet. Im Rahmen der Vorform-Herstellung können auch andere Schritte oder alternative Schritte ausgeführt werden. Am Ende der Vorform-Herstellung wird das Werkstück als Radrohling oder Werkstückrohling K1 bezeichnet. Der Schritt 102 oder die Schritte 102 - 104 können zum Beispiel in einer sogenannten Vorbearbeitungsmaschine oder in mehreren verschiedenen Maschinen ausgeführt werden.

Nun folgt das sogenannte Verzahnen. Gemäss Erfindung wird als Verfahren vorzugsweise das (Trocken-)Kegelradfräsen (Box 105) eingesetzt, um im Rahmen eines Vorbearbeitungsprozesses mit einem Fräser eine vordefinierte Anzahl von Zahnlücken am Kegelradrohling K1 in der ungefähren Position und mit ungefähren Aufmassen zu fräsen. Dann folgt der optionale Schritt des (Kegelrad-) Schlichtens (Box 106), der mit einem Kegelradschlichtwerkzeug ausgeführt wird und der durch die Schlichtbearbeitung den Zahnlücken, respektive den angrenzenden Zahnflanken, die gewünschte Form mit der vorgegebenen Genauigkeit gibt.

Die Schritte 105 und 106 können in ein und derselben Maschine ausgeführt werden. Der Werkstückrohling K1 muss also nicht umgespannt oder transferiert werden.

Anschliessend folgt typischerweise eine Wärmebehandlung (Box 107). Diese Wärmebehandlung zählt typischerweise nicht mehr zur Weichbearbeitung. Sie dient dazu den Werkstückrohling K1 zu härten. Nach dem Härten wird das Zahnrad mit K3* bezeichnet. Dann kann eine Hart-Feinbearbeitung folgen (Box 108). Bei dieser Hart-Feinbearbeitung erfolgt eine Hartbearbeitung der Verzahnung, zum Beispiel um Verzug zu beheben, der sich durch das Härten ergeben hat. Dann ist das Kegelrad K3 fertig. Im Rahmen dieser Hart-Feinbearbeitung, oder wenn bei Verzahnungen mit geringeren Anforderungen bisher keine Hart-Feinbearbeitung erfolgte kann das erfindungsgemässe Verfahren zum Glätten mit Klopfererkennung eingesetzt werden.

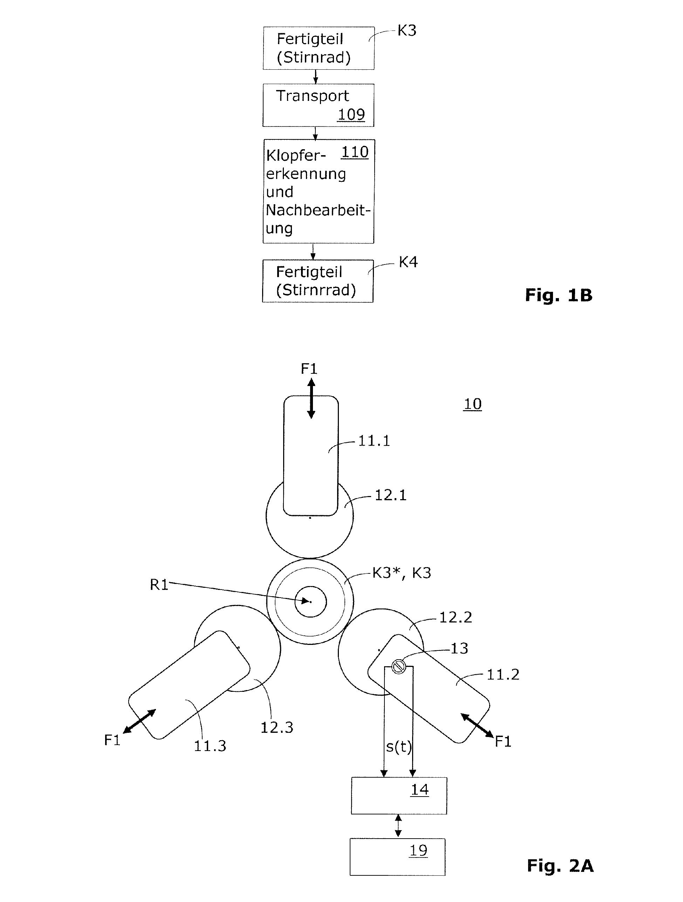

Glätten bezeichnet hier das spanabhebende Nachbearbeiten von Zahnflanken von gehärteten Zahnrädern K3* oder K3. Es kommt gemäss Erfindung mindestens ein Glättrad 12.1, 12.2, 12.3 als Bearbeitungsrad zum Einsatz, das mit dem nachzubearbeitenden Zahnrad K3* oder K3 in Wechselwirkung steht, wie in Fig. 2A angedeutet. Gemäss Erfindung findet die spanabhebende Nachbearbeitung hauptsächlich als Schleifbewegung zwischen den Flanken der Zähne des Zahnrades K3* oder K3 und des entsprechenden Glättrades 12.1, 12.2, 12.3 statt.

Ein Glättrad 12.1, 12.2, 12.3 ist vorzusgweise mit einer abrasiv wirkenden Beschichtung, vorzugsweise einer Diamantbeschichtung, versehen.

Anstatt ein abrasiv beschichtetes Glättrad 12.1, 12.2, 12.3 einzusetzen, kann auch ein abrasiv wirkendes Schmier- und/oder Poliermittel zwischen die Flanken der beiden im Eingriff befindlichen Räder 12.1, 12.2, 12.3, K3*, K3 eingebracht werden. Das abrasiv wirkende Schmier- und/oder Poliermittel kann z.B. Schleifkörper in einer Emulsion umfassen. Es ist auch eine Kombination von abrasiv beschichtetem Glättrad 12.1, 12.2, 12.3 mit abrasiv wirkendem Schmier- und/oder Poliermittel denkbar.

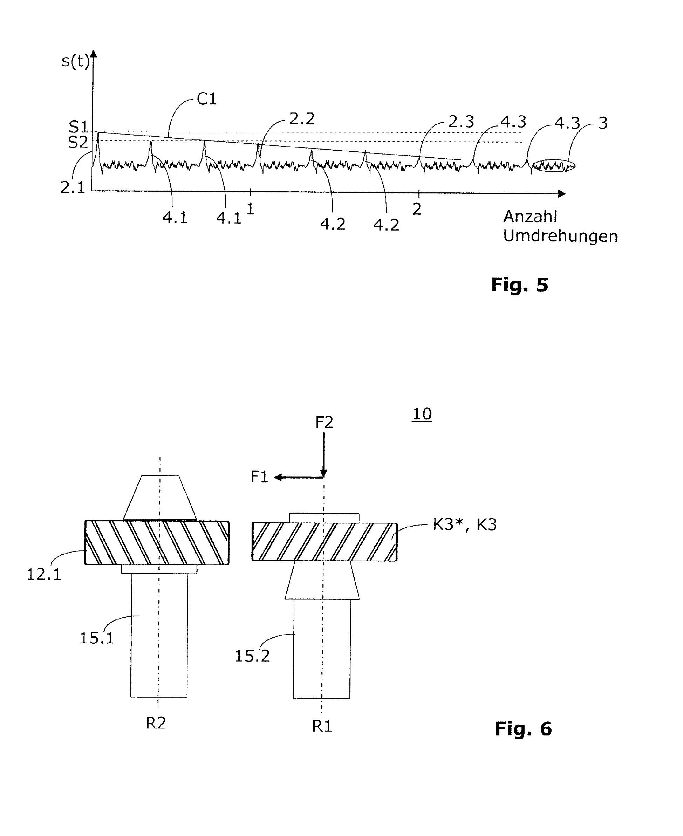

Bei dem Glättrad 12.1, 12.2, 12.3 handelt es sich um ein zahnradförmiges Rollwerkzeug. Je nach Form des nachzubearbeitenden Zahnrades K3* oder K3 wird ein entsprechendes Glättrad 12.1, 12.2, 12.3 eingesetzt. Wie in Fig. 6 zu erkennen ist, wird beim Nachbearbeiten eines schrägverzahnten Zahnrades K3* oder K3 z.B. ein entsprechend schräg verzahntes Glättrad 12.1 eingesetzt.

Primär kommt die Erfindung jedoch zur Anwendung, um Stirn- oder Schraubräder einer Hart-Nachbearbeitung zun entziehen, um Transport- oder Handhabungsschäden der Zahnflanken von Fertigteilen K3 beheben zu können. Dieser Ansatz ist in Fig. 1B schematisch angedeutet. Das Stirnrad K3 wird gelagert oder an einen anderen Ort transportiert (Box 109). Dann wird das erfindungsgemässe Verfahren (Box 110) zum Glätten mit Klopfererkennung eingesetzt, um das Zahnrad K3 nachzubearbeiten, um dann ein Fertigteil K4 bereit zu stellen, das keine Transport- oder Handhabungsschäden der Zahnflanken aufweist.

Der Begriff Körperschall wird hier für Schwingungen im Festkörper des Zahnrades oder der Maschine 10 verwendet. Die Frequenzen der Schwingungen müssen nicht notwendigerweise im Bereich des menschlichen Hörvermögens liegen. Der Körperschall ergibt sich gemäss Erfindung hauptsächlich aus Stossanteilen und Rollanteilen. Die Rollanteile ergeben sich aus dem Abrollen des Glättrads 12.1, 12.2, 12.3 mit dem Zahnrad K3*, K3 und stellen eine Art Hintergrundrauschen oder Störrauschen dar. Die Stossanteile sind zurück zu führen auf die Glättbearbeitung, bei der ein Glättrad 12.1, 12.2, 12.3 überschüssiges Material an den Flanken des Zahnrades K3* oder K3 abträgt. Ausserdem umfasst der Stossanteil sogenannte Klopferspitzen, die typischerweise durch Oberflächenbeschädigungen und andere (lokale) schadhafte Stellen der Zahnflanken hervorgerufen werden.

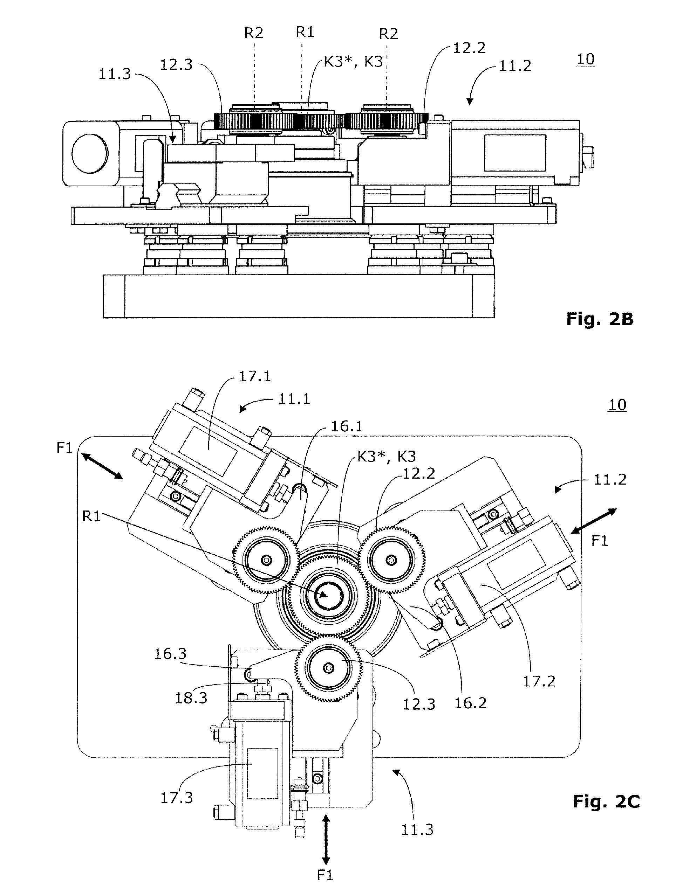

In Fig. 2A ist eine entsprechende Maschine 10 in einer schematischen Draufsicht gezeigt. Diese Maschine 10 zeichnet sich dadurch aus, dass drei Glätträder 12.1, 12.2 und 12.3 zum Einsatz kommen, die in einem gleichmässigen Winkelabstand zueinander angeordnet sind. Die Winkelpositionen betragen hier 0 Grad, 120 Grad und 240 Grad. Das zu bearbeitende Zahnrad K3* oder K3 sitzt mittig zwischen diesen Glätträdern 12.1, 12.2 und 12.3. Die Rotationsachse R1 des Zahnrads K3* oder K3 steht vertikal (d.h. senkrecht zur Zeichnungsebene). Die Rotationsachsen R2 der drei Glätträder 12.1, 12.2 und 12.3 verlaufen parallel zur Rotationsachse R1, wie Fig. 2B angedeutet.

In den Figuren 2B und 2C ist eine konkrete Maschine 10 gezeigt, die auf dem Prinzip der in Fig. 2A gezeigten Maschine 10 basiert. In Fig. 2B sind zwei der Glätträder 12.2, 12.3 zu sehen, die mit einem Zylinderrad K3*, K3 in Wechselwirkung stehen. Die Maschine 10 befindet sich in der gezeigten Situation in der Nachbearbeitungsphase. In Fig. 2C sind die drei Schlitten 11.1, 11.2, 11.3 zu sehen. Die Schlitten 11.1, 11.2, 11.3 haben in dieser Ausführungsform zwei Hauptfunktionen. Einerseits können sie je eine axiale Zustellbewegung F1 ausführen, um das jeweilige Glättrad 12.1, 12.2, 12.3 in die Eingriffsposition zu überführen. Diese axiale Zustellbewegung F1 kann zum Beispiel bei jedem Schlitten 11.1, 11.2, 11.3 durch einen entsprechenden linearen Spindelantrieb ausgeführt werden. Andererseits müssen die Glätträder 11.1, 11.2, 11.3 mit einer gewissen Kraft gegen das zu bearbeitende Zahnrad gepresst werden. In der gezeigten Ausführungsform sitzt auf jedem der Schlitten 11.1, 11.2, 11.3 jeweils ein Schiebemechanismus 16.1, 16.2, 16.3 mit Hydraulikzylinder 17.1, 17.2, 17.3. Jeder der drei Hydraulikzylinder 17.1, 17.2, 17.3 hat einen Stössel 18.1, 18.2, 18.3. Die Stössel 18.1, 18.2, 18.3 werden bei Betätigung der Hydraulikzylinder 17.1, 17.2, 17.3 parallel zu den Richtungen F1 ausgefahren oder herausgedrückt. Durch Bewegung werden die Glätträder 11.1, 11.2, 11.3 mit einer radial wirkenden Kraft gegen das Zahnrad K3*, K3 gepresst.

In einer anderen Ausführungsform kann auf jedem der Schlitten 11.1, 11.2, 11.3 jeweils ein Hebelmechanismus mit Hydraulikzylinder sitzen. Jeder der drei Hydraulikzylinder hat einen Stössel, ähnlich wie in Fig. 2B und 2C, die bei Betätigung der Hydraulikzylinder parallel zu den Richtungen F1 ausgefahren oder herausgedrückt werden. Diese Stössel erzeugen nach dem Hebelgesetz einen Anpressdruck der Glätträder 11.1, 11.2, 11.3 in Bezug auf das Zahnrad K3*, K3.

In einer bevorzugten Ausführungsform können die vertikal stehenden Rotationsachsen R2 der Glätträder 12.1, 12.2 und 12.3 leicht pendelnd gelagert sein, um eine besser Abtragarbeit der Glätträder 12.1, 12.2 und 12.3 zu erreichen. Vorzugsweise wird dies mit einer Pendelrollenlagerung der Glätträder 12.1, 12.2 und 12.3 erzielt.

In Fig. 2A und 2C ist durch Doppelpfeile F1 angedeutet, dass die Glätträder 12.1, 12.2 und 12.3 radial auf die Rotationsachse R1 hin zugestellt werden können und dass die Glätträder 12.1, 12.2 und 12.3 mit einer Kraft gegen das Zahnrad K3* oder K3 gepresst werden. Die Erfindung ist aber auch auf Maschinen 10 einsetzbar, bei denen die Glätträder 12.1, 12.2 und 12.3 axial zugestellt werden (siehe z.B. Fig. 6).

In Fig. 2A ist angedeutet, dass mindestens ein Körperschallsensor 13 in oder an der Maschine 10 angebracht ist. Dieser Körperschallsensor 13 liefert ein kontinuierliches analoges Ausgangssignal s(t), das einer Auswerteeinheit 14 zugeführt wird. Diese Auswerteeinheit 14 ist vorzugsweise mit der Maschinensteuerung 19 verknüpft, wie in Fig. 2A schematisch angedeutet. Entweder erfolgt die Bearbeitung des Signals s(t) komplett in der Auswerteeinheit 14, oder die Auswerteeinheit 14 dient nur als Schnittstelle zur Umsetzung des analogen Signals s(t) in ein digitales Signal, das dann in der Steuerung 19 weiterverarbeitet wird. Die erfindungsgemässe Qualitätsbeurteilung kann in der Auswerteeinheit 14, oder in der Steuerung 19 oder unter Zusammenwirkung der Auswerteeinheit 14 und der Steuerung 19 erfolgen.

Die Auswerteeinheit 14 umfasst vorzugsweise eine Filterstufe, um das Ausgangssignal s(t) elektronisch filtern zu können, um einen Rauschanteil des Ausgangssignals s(t) von periodisch wiederkehrenden Klopferspitzen im Ausgangssignal s(t) zu trennen oder zu diskriminieren. Die Filterstufe ist vorzugsweise im analogen Teil der Auswerteeinheit 14 enthalten. Vorzusgweise wird das Filtern softwareseitig und nicht hardwareseitig gelöst.

Vorzugsweise wird der Körperschallsensor 13 dort angebracht, wo es zu dem Zahneingriff zwischen einem Glättrad 12.1 und einer Zahnflanke kommt. D.h. der Körperschallsensor 13 sitzt vorteilhafterweise am oder in einem der erwähnten Schlitten 11.1, 11.2, 11.3, oder am oder in einer Prüflingsaufnahme, die zum Einspannen des zu prüfenden Zahnrades dient.

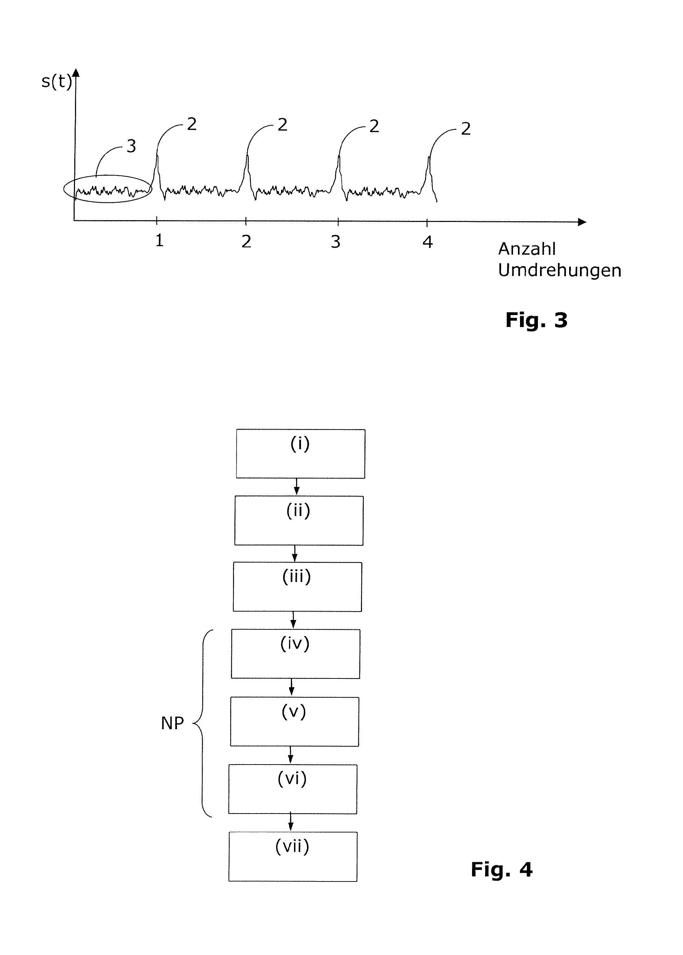

In Fig. 3 ist ein beispielhaftes Signal s(t) in einer schematischen Darstellung gezeigt, die es ermöglicht die Klopferspitzen 2 von den Rollanteilen zu unterscheiden. Es ist ein Zyklus von vier Umdrehungen eines nachzubearbeitenden Stirnrades K3 gezeigt. Bei jeder Umdrehung tritt nur eine Klopferspitze 2 auf, was bedeutet, dass nur eine der Zahnflanken eine deutliche (im Sinne von "körperschall-mässig hörbare") Beschädigung aufweist. Das Rauschen ist anhand von kleinen Schwankungen 3 dargestellt. Das gezeigte Beispiel basiert auf der Annahme, dass nur ein Glättrad 12.1 zum Einsatz kommt und dass nur jeweils eines der Glättzähne des Glättrades 12.1 mit nur einer der Zahnflanken eines Stirnrades K3 in Wechselwirkung tritt. Je nach Überdeckungsgrad kann der Signalverlauf von s(t) auch anders aussehen. Werden z.B. drei in gleichen Winkelabständen angeordnete Glätträder 12.1., 12.2 und 12.3 eingesetzt, wie in Fig. 2A, 2B und 2C gezeigt, so ergeben sich drei Klopferspitze 2 pro Umdrehung des Stirnrades K3.

Je nach Ausführungsform der Erfindung, sitzen die Glätträder 12.1, 12.2 und 12.3 und/oder das zu bearbeitende Zahnrad K3*, K3 auf einem Schlitten 11.1, 11.2 und 11.3, oder auf einem verschiebbaren Spindelstock 15.1, 15.2, der es ermöglicht die relative Zustellbewegung (in Fig. 2A und 2C durch das Bezugszeichen F1 und in Fig. 6 durch die Bezugszeichen F1, F2 gekennzeichnet) auszuführen und den radial wirkenden Anpressdruck aufzubringen.

Weitere Details der Erfindung werden im Folgenden anhand einer genaueren Beschreibung eines Ausführungsbeispiels eines entsprechenden Verfahrens beschrieben.

Das erfindungsgemässe Verfahren zeichnet sich durch die folgenden Schritte aus, die in Fig. 4 rein schematisch dargestellt sind. Die genannten Schritte müssen nicht notwendigerweise in der genannten Reihenfolge ablaufen.
i. Das Zahnrad K3* oder K3 wird in einer Bearbeitungsmaschine 10 aufgespannt.
ii. Mindestens ein Glättrad 12.1, 12.2, 12.3 wird in der Bearbeitungsmaschine 10 aufgespannt.
iii. Es wird eine relative Zustellbewegung F1 (oder F1 und F2) ausgeführt, um das Glättrad 12.1, 12.2, 12.3 mit dem Zahnrad K3*, K3 in eine vordefinierte Eingriffsposition zu bringen.
iv. Es werden das Zahnrad K3*, K3 und/oder das Glättrad 12.1, 12.2, 12.3 in Rotation versetzt, während sich das Glättrad 12.1, 12.2, 12.3 mit dem Zahnrad K3*, K3 im Eingriff befindet. Es kann nur eines der Räder K3*, K3, 12.1, 12.2, 12.3 oder es können alle Räder K3*, K3, 12.1, 12.2, 12.3 angetrieben sein. Diese Phase nennt sich Nachbearbeitungsphase NP. Während sich das Zahnrad K3*, K3 und das Glättrad 12.1, 12.2, 12.3 drehen, steht das Glättrad 12.1, 12.2, 12.3 unter (radialem Anpress-) Druck mit den Zahnflanken des Zahnrades K3*, K3 in Wechselwirkung. Durch diese Wechselwirkung kommt es zu der erwähnten spanabhebenden Schleif-und/oder Glätt-Bearbeitung.
v. Während dieser Nachbearbeitungsphase NP wird eine Körperschallauswertung durchgeführt. Zu diesem Zweck wird ein Ausgangssignal s(t) eines Körperschallsensors 13 abgefragt, der Teil der Bearbeitungsmaschine 10 ist. Bei dem Ausgangssignal s(t) handelt es sich um ein analoges Messsignal, welches das gemeinsame Schwingungsverhalten des Glättrades 12.1, 12.2, 12.3 und des Zahnrades K3*, K3 charakterisiert, respektive abbildet.
vi. Das Ausgangssignal s(t) wird während der Nachbearbeitungsphase NP ausgewertet, um on-the-fly (d.h. quasi in Echtzeit) eine Qualitätsbeurteilung des Zahnrades K3*, K3 zu ermöglichen.
vii. Die Nachbearbeitungsphase NP wird beendet, nachdem die Qualitätsbeurteilung ergeben hat, dass ein Auswahlkriterium erreicht ist.

Das Einfädeln oder Einspannen des Zahnrads K3*, K3 und des oder der Glätträder 12.1, 12.2, 12.3 erfolgt vorzugsweise so, dass es zu keiner unerwünschten harten Kollision zwischen den Zähnen des oder der Glätträder 12.1, 12.2, 12.3 und den Zähnen des Zahnrads K3*, K3 kommt, weil durch eine solche Kollision Schäden (z.B. ein Abplatzen der Diamanbeschichtung) entstehen können. Da die Maschine 10 mit einem empfindlichen Körperschallsensor 13 aufgestattet ist, kann dieser Köperschallsensor 13 auch beim Einfädeln oder Einspannen eingesetzt werden. Wenn es beim Einfädeln oder Einspannen zu einer Kollision kommt, so kann man das anhand des Signals s(t) erkennen. Die Steuerung eines Roboter-oder Handlingarms, der zum Beispiel zum Einfädeln oder Einspannen eingesetzt wird, kann so ausgelegt sein, dass sie beim Auftreten einer Berührung eine Rückzugs- und Drehbewegung macht. Wenn der Körperschallsensor 13, wie beschrieben, auch während der Einspannphase EP benutzt wird, dann kann man in dieser Phase mit einer anderen Empfindlichkeitsstufe arbeiten, da es während der Phase EP keine oder deutlich weniger Störgeräusche gibt. Eine Verstärkerstufe, die vorzugsweise Teil der Auswerteeinheit 14 ist, kann mit einem höheren Verstärkungsfaktor arbeiten, um bereits kleinste Kollisionen oder Berührungen "hören" und die Bewegungsabläufe entsprechend anpassen zu können.

Anhand von Fig. 5 wird mit einem weiteren beispielhaften schematischen Signal s(t) eine besonders bevorzugte Ausführungsform des Verfahrens beschrieben. Es kommt eine Maschine 10 nach Fig. 2A, 2B, 2C oder Fig. 6 zum Einsatz, die drei Glätträder 12.1, 12.2, 12.3 aber nur einen Körperschallsensor 13 im Bereich eines der Glätträder 12.3 umfasst. Nach dem Aufspannen des Zahnrads K3* oder K3 und der Glätträder 12.1, 12.2, 12.3 wird eine Zustellbewegung F1 (siehe Fig. 2) oder F1 und F2 (siehe Fig. 6) ausgeführt und die Räder K3*, K3, 12.1, 12.2, 12.3 werden direkt oder indirekt in Rotation versetzt. Im gezeigten Beispiel wird davon ausgegangen, dass eine der Zahnflanken des Zahnrades K3* oder K3 eine kleine Beschädigung aufweist, die sich im Signal s(t) als Klopferspitze 2.1 zeigt, wenn dieser Zahn mit dem Glättrad 12.2 in Wechselwirkung tritt, das den Körperschallsensor 13 trägt. Wenn sich das Zahnrad K3* oder K3 weiter dreht und der beschädigte Zahn mit einem der beiden anderen Glätträder 12.1, 12.3 in Wechselwirkung tritt, ergeben sich auch Klopferspitzen 4.1, die aber aufgrund der räumlichen Distanz und der weniger guten Schallkopplung etwas kleiner sind. Die Amplitude der Klopferspitze 2.1 ist mit S1 gekennzeichnet und die Amplitude der Klopferspitzen 4.1 liegen etwas tiefer und sind mit S2 gekennzeichnet. Nachdem das Zahnrad K3* oder K3 eine erste Umdrehung absolviert hat, gelangt der beschädigte Zahn wieder zu dem Glättrad 12.2 und löst erneut eine Klopferspitze aus, die hier mit 2.2 gekenneichnet ist. Da durch die Wechselwirkung der Glätträder 12.1, 12.2, 12.3 mit den Zähnen des Zahnrads K3* oder K3 eine Oberflächenbearbeitung statt findet, hat die Klopferspitze 2.2 eine etwas kleinere Amplitude. Dasselbe gilt auch für die nachfolgenden Klopferspitzen 4.2, 2.3 und 4.3. Die abnehmende Tendenz der Maximalamplitude der Klopferspitzen ist in Fig. 5 durch eine stetig fallende Kurve C1 dargestellt. Im gezeigten Beispiel sind die Klopferspitzen 4.3 nach etwas mehr als zwei Umdrehungen kaum noch vom Rauschen 3 zu unterscheiden.

Das Ausgangssignal s(t) wird während der Nachbearbeitungsphase NP ausgewertet, um on-the-fly (d.h. quasi in Echtzeit) eine Qualitätsbeurteilung des Zahnrades K3*, K3 zu ermöglichen. Diese Qualitätsbeurteilung kann zum Beispiel auf dem Vergleich der Amplitude der Klopferspitzen mit einem vorgegebenen Schwellenwert erfolgen. Wird dieser Schwellenwert erreicht oder unterschritten, so kann die Bearbeitung als erfolgreich abgeschlossen betrachtet werden. Statt mit einem Schwellwert zu arbeiten, kann auch das Gefälle der Kurve C1 ausgewertet werden. Wenn die erste Ableitung der Kurve C1 Null erreicht, oder wenn die erste Ableitung der Kurve C1 einen Schwellenwert erreicht oder unterschreitet, dann kann die Bearbeitung als erfolgreich abgeschlossen betrachtet werden.

In einer besonders bevorzugten Ausführungsform werden sowohl das Gefälle der Kurve C1 als auch das Erreichen oder Unterschreiten eines Schwellenwerts der Kurve C1 ausgewertet. Anhand einer Auswertung des Gefälles kann geschlossen werden, ob die Glättbearbeitung überhaupt einen Erfolg liefert. Wenn z.B. die Amplituden der Klopferspitzen gleich bleiben oder sich nur unwesentlich ändern, dann würde eine weitere Bearbeitung keine Verbesserung liefern. In diesem Fall kann das Zahnrad aus dem Prozess ausgesondert werden. Ein ausgesondertes Zahnrad kann
- einer manuellen Nachbearbeitung,
- einer maschinellen Nachbearbeitung auf einer anderen Maschine,
- einer Kennzeichnung oder Einteilung als Ausschuss unterzogen werden.

Die Nachbearbeitungsphase NP wird beendet, nachdem die Qualitätsbeurteilung ergeben hat, dass eines oder mehrere der genannten Auswahlkriterien erreicht wurden.

In Fig. 6 ist eine weitere Maschine 10 in einer schematischen Seitenansicht gezeigt. Diese Maschine 10 zeichnet sich dadurch aus, dass mindestens ein Glättrad 12.1 zum Einsatz kommt. Das zu bearbeitende Zahnrad K3* oder K3 sitzt auf einem Schlitten oder auf einem verschiebbaren Spindelstock 15.1. Die Rotationsachse R1 des Zahnrads K3* oder K3 steht vertikal (d.h. die Rotationsachse R1 liegt hier in der Zeichnungsebene). Die Rotationsachse R2 des Glättrads 12.1 verläuft parallel zur Rotationsachse R1. Das Zahnrad K3* oder K3 sitzt auch auf einem Schlitten oder auf einem verschiebbaren Spindelstock 15.2. Die Zustellbewegung setzt sich hier aus einer ersten Relativbewegung und einer zweiten Relativbewegung zusammen, wie durch die Pfeile F1 und F2 angedeutet. Die ersten Relativbewegung F1 verläuft parallel zur Rotationsachse R1 und die zweiten Relativbewegung F2 verläuft schräg oder senkrecht zur Rotationsachse R1. Diese Art der Zustellbewegung ist erforderlich, um bei schrägverzahnten Rädern ein sauberes Einfädeln zu ermöglichen. Je nach Zahnradart kann die Zustellbewegung auch anders ausgeführt werden.

Je nach Ausführungsform kann die Rotationsachse R2 des Glättrades 12.1 oder die Rotationsachse R1 des Zahnrades K3* oder K3 eine motorisch angetriebene Achse sein. Es können auch beide Achsen R1 und R2 angetrieben sein. Dies erfolgt meist bremslastfrei.

In einer besonders bevorzugten Ausführungsform wird nur eine Achse R1 oder R2 angetrieben während die andere Achse R2 oder R1 mit einem kleinen Bremsmoment beaufschlagt wird, um eine bessere Reibarbeit zwischen dem Glättrad 12.1 und dem Zahnrad K3* oder K3 zu erzielen. In diesem Fall erfolgt die Nachbearbeitung unter Bremslast. Dieser Ansatz lässt sich auch bei der Maschine 10 nach Fig. 2A, 2B und 2C realisieren.

Es ist ein Vorteil der Erfindung, dass die Hart-Nachbearbeitung erfolgen kann ohne ein Zahnrad K3* oder K3 mehrfach auf- oder umspannen zu müssen.

Der Verlauf des Körperschallsignals während des Glättvorgangs kann Aufschluss über die "Glättbarkeit" eines Defektes liefern. Es ist gemäss Erfindung ein frühzeitiger Abbruch des Glättvorgangs möglich, falls keine Signaländerung des Körperschallsignals beobachtbar ist oder es kann eine Verlängerung der Glättdauer vorgesehen werden, wenn der Glätteffekt zwar sichtbar aber noch nicht ausreichend ist.

Diese beiden Informationen sind vorteilhaft, da sie die Lebensdauer der Werkzeuge verlängern und reduziert damit die Betriebskosten der Anlage reduzieren können. Ausserdem wird der Aufwand für Nacharbeitung deutlich reduziert.

Alle hier beschriebene Zusätze wie die
- pendelnde Lagerung der Achsen, und/oder
- der Einsatz von mehr als einem Glättrad, und/oder
- die Verwendung von abrasiv wirkenden Mitteln, wie abrasiv wirkenden Beschichtungen und/oder abrasiv wirkenden Schmier- oder Poliermittel, dienen dazu die Effizienz des automatisierten Glättprozesses zu steigern und damit die Reduzierung der Anzahl von nachzubearbeitenden Teilen weiter zu verbessern.

Das Verfahren hat sich als effizient und zuverlässig erwiesen und lässt sich problemlos in existierende Fertigungsprozesse integrieren.

## Patentansprüche

1. Verfahren zur Hart-Nachbearbeitung der Zahnflanken eines Zahnrades (K3*, K3) mit den folgenden Schritten:
a. Aufspannen des Zahnrades (K3*, K3) in einer Bearbeitungsmaschine (10),
b. Aufspannen eines Glättrades (12.1, 12.2, 12.3) in der Bearbeitungsmaschine (10),
c. Ausführen einer relativen Zustellbewegung (F1, F2), um das Glättrad (12.1, 12.2, 12.3) mit dem Zahnrad (K3*, K3) in eine vordefinierte Eingriffsposition zu bringen,
d. Antreiben des Zahnrades (K3*, K3) und/oder des Glättrades (10) während sich das Glättrad (12.1, 12.2, 12.3) mit dem Zahnrad (K3*, K3) im Eingriff befindet, wobei sich während dieser Nachbearbeitungsphase (NP)
- das Zahnrad (K3*, K3) und das Glättrad (10) drehen, und
- wobei das Glättrad (12.1, 12.2, 12.3) unter Druck mit den Zahnflanken des Zahnrades (K3*, K3) in Wechselwirkung steht,
e. Durchführen einer Körperschallauswertung während dieser Nachbearbeitungsphase (NP),
- wobei zu diesem Zweck ein Ausgangssignal (s(t)) eines Körperschallsensors (13) abgefragt wird, der Teil der Bearbeitungsmaschine (10) ist, und
- wobei das Ausgangssignal (s(t)) ein analoges Messsignal ist, welches das gemeinsame Schwingungsverhalten des Glättrades (12.1, 12.2, 12.3) und des Zahnrades (K3*, K3) charakterisiert,
f. Auswerten des Ausgangssignals (s(t)) während der Nachbearbeitungsphase (NP), um eine Qualitätsbeurteilung des Zahnrades (K3*, K3) zu ermöglichen,
g. Abbrechen der Nachbearbeitungsphase (NP), nachdem die Qualitätsbeurteilung ergeben hat, dass ein Auswahlkriterium erreicht ist.

2. Verfahren nach Anspruch 1, **dadurch gekennzeichnet, dass** das Ausgangssignal (s(t)) elektronisch oder softwareseitig gefiltert wird, um einen Rauschanteil des Ausgangssignals (s(t)) von periodisch wiederkehrenden Klopferspitzen im Ausgangssignal (s(t)) zu trennen.

3. Verfahren nach Anspruch 2, **dadurch gekennzeichnet, dass** eine Auswerteeinheit (14) die Klopferspitzen mit einer Vorgabegrösse, vorzugsweise ein Schwellwert, vergleicht, um zu ermitteln, ob das Auswahlkriterium erreicht wird.

4. Verfahren nach Anspruch 3, **dadurch gekennzeichnet, dass** im Falle des Nichterreichens des Auswahlkriteriums die Schritte d. und e. weiter ausgeführt werden.

5. Verfahren nach Anspruch 3 oder 4, **dadurch gekennzeichnet, dass** im Falle des Erreichens des Auswahlkriteriums der Schritt g. ausgeführt wird.

6. Verfahren nach einem der vorhergehenden Ansprüche, **dadurch gekennzeichnet, dass** die Bearbeitungsmaschine (10) drei Glätträder (12.1, 12.2, 12.3) umfasst, die beim Schritt b. gleichmässig koordiniert zugestellt werden, um aus drei Richtungen, die radial auf eine Drehachse (R1) des Zahnrades (K3*, K3) weisen, Druck auf das Zahnrad (K3*, K3) auszuüben.

7. Verfahren nach einem der vorhergehenden Ansprüche, **dadurch gekennzeichnet, dass** das Verfahren beendet wird, falls die Klopferspitzen nicht innerhalb einer vorgegebenen Zeit das Auswahlkriterium unterschreiten.

8. Verfahren nach Anspruch 7, **dadurch gekennzeichnet, dass** das Zahnrad (K3*, K3) in diesem Fall einem der folgenden Schritte unterzogen wird
- einer manuellen Nachbearbeitung,
- einer maschinellen Nachbearbeitung auf einer anderen Maschine,
- einer Kennzeichnung oder Einteilung als Ausschuss.

9. Verfahren nach Anspruch 7, **dadurch gekennzeichnet, dass** das Zahnrad (K3*, K3) in diesem Fall in eine Winkelposition gebracht wird, die es erlaubt diejenige Zahnflanke zu identifizieren, die Klopferspitzen verursacht hat.

10. Verfahren nach einem der vorhergehenden Ansprüche, **dadurch gekennzeichnet, dass** das Verfahren eingesetzt wird, um Beschädigungen der Zahnflanken des Zahnrades (K3*, K3) zu beheben, die sich durch Klopferspitzen im Ausgangssignal (s(t)) zeigen.

11. Verfahren nach einem der vorhergehenden Ansprüche, **kennzeichnet durch** die folgenden Schritte, die vor dem Schritt a ausgeführt werden:
- automatisiertes Einbringen des Zahnrades (K3*, K3),
- Auswerten eines Ausgangssignals (s(t)) des Körperschallsensors (13), um anhand einer Signalspitze eine Kollision des Zahnrades (K3*, K3) und eines der Glätträder (12.1, 12.2, 12.3) zu detektiern,
- Ausführen einer Ausweichbewegung beim Einbringen des Zahnrades (K3*, K3).
